# EUROPEAN PATENT SPECIFICATION

(11) **EP 2 936 977 B1**
(45) Date of publication and mention of the grant of the patent: **15.02.2017**
(21) Application number: 14165939.1
(22) Date of filing: 25.04.2014
(51) Int. Cl.: A01K 1/015

(54) **A stable floor element**
Stallbodenelement
Élément de plancher d'étable

(43) Date of publication of application: 28.10.2015
(73) Proprietor: United Business Care B.V., 5451 HZ Mill (NL)
(72) Inventor: Jans, Egbertus Peter Henricus, 5451 HV MILL (NL)
(74) Representative: De Vries & Metman

(56) References cited:
- WO-A1-2009/136376
- WO-A1-2012/004717
- DE-U1-202008 008 274
- US-A- 3 455 279

## Description

The present invention relates to a stable floor element, comprising at least two beams which are spaced from each other.

Stable floor elements in the form of gratings which are installed next to each other in order to form a stable floor are known. The known stable floor elements are mounted above a slurry storage for receiving manure and urine from animals walking on the stable floor. The excrements of the animals fall through gaps between the beams into the slurry storage. Excrements that remain on the walking surface may cause a slippery surface and reduce the level of traction to the animals.

WO 2012/004717 is related to a stable floor element comprising a supporting element, with a service face situated at the top when in use and a bottom face situated on the bottom side, whereby the service face has one or several levels, recesses or openings, whereby a comfort element made of rubber or an plastic synthetic material is provided in at least one of these levels, recesses or openings. At least one of the aforesaid levels, recesses or openings is at least partly confined by two opposite side walls and at least one bearing wall directed parallel or almost parallel to the aforesaid service face, such that an aforesaid comfort element rests at least partly on this bearing wall.

WO 2009/136376 is related to a prefabricated stable floor element comprising a supporting element made of concrete, with a service face situated at the top when in use and a bottom face situated on the bottom side, whereby the service face has one or several recesses or openings. In at least one of these recesses or openings has been provided an insert element made of rubber or an elastic synthetic material, which insert element reaches as of the inner space in the recess or the opening in which it has been provided in order to fix the insert element, to right underneath, in line with or above the service face, i.e. seen in the position of use of the stable floor element.

The present invention aims to provide an improved stable floor element.

For this purpose, the stable floor element is as defined in claim 1.

The common upper surface appears to provide a comfortable walking surface for animals due to the alternating rigid and elastic regions. The difference in flexibility of the rigid region and the elastic region maximizes the level of traction to animals walking on the stable floor element and minimizes the risk of slipping. This provides the animals the security they need to move about for feed and water, for example. Furthermore, the top layer prevents direct contact between the concrete cores of the beams and manure and urine, hence reducing emission of hazardous gases which might arise if excrements were absorbed in concrete parts of the beams. Besides, the combination of the rigid region and the elastic region appears to have a positive effect on limited wear of claws of the animals. The top side of the concrete core may be flat, but this is not essential. In practice any height differences between the upper sides of the rigid and elastic regions will be limited in order to create a substantially even walking surface.

The regions are formed from separate elements. This provides the opportunity to replace one of the elements if they have different life-spans.

Elastic regions extend at opposite sides of the rigid region. When a claw of an animal slips from the rigid region it is received by an elastic region at one of the opposite sides of the rigid region.

The elastic regions are formed by a common elastic element that at least partly envelopes the rigid element as seen from above, since the rigid element may then lock the common elastic element in different directions parallel to the top side of the concrete core of the beam. If the common elastic element entirely surrounds the rigid element, the rigid element locks the common elastic element in all horizontal directions.

The rigid element may be fixed to the concrete core and the elastic element is snap-locked to the rigid element. This avoids the application of a separate attachment of the elastic element to the concrete core of the beam.

In a practical embodiment opposite side walls of the rigid element and cooperating opposite inner side walls of the common elastic element are tapered in a direction from their upper sides towards the concrete core of the beam.

The rigid region may be made of a plastic or a plastic composite, for example, whereas the elastic region may be made of rubber.

The invention is also related to a stable floor element as defined in claim 4, comprising at least two beams which are spaced from each other, wherein each of the beams has a concrete core including a top side which is provided with an elevated portion, thus forming a rigid region, wherein elastic members are located adjacent to the elevated portion at opposite sides thereof, thus forming elastic regions, wherein the elastic members are fixed to each other and wherein the upper sides of the elevated portion and the elastic members form a common upper surface of the stable floor element. In this embodiment the rigid region or elevated portion is formed integral with the concrete core of the beam and its upper side is the same as the top side of the concrete core. Additionally, its upper side may be coated to cover the concrete, but the rigid region mainly comprises concrete. The elastic members are supported by depressed portions of the top side of the concrete core, which are located adjacent to the elevated portion. Similar to the stable floor element as described hereinbefore the upper sides of the rigid region and the elastic members form a common upper surface of the stable floor element, which provides a comfortable walking surface for animals. If the rigid region also comprises concrete, but it is not made of one piece with the concrete core, it can be considered as a part of the top layer in the stable floor element as described above.

The elastic members are formed by a common elastic element which at least partly envelopes the elevated portion. This provides the opportunity to install the elastic element easily on the concrete core. Particularly, if the common elastic element entirely envelopes the elevated portion as seen from above, the elastic element is fixed in all horizontal direction of the stable floor element by the elevated portion. Besides, the risk of tilting of the elastic with respect to the concrete core is minimal.

The elastic members may extend at least up to opposite lateral edges of the beam.

Preferably, the upper sides of the rigid and elastic regions have different roughnesses such that additional traction for animal feet is created.

The rigid region may be elongated whereas its longitudinal direction is parallel to the longitudinal direction of the beam.

In a preferred embodiment the rigid region is located in the centre of the beam as seen in transverse direction of the beam.

A gap between neighbouring beams may be provided with a valve element for closing the gap, wherein the valve element has flanges which are at least partly sandwiched between the elastic regions and the concrete cores of the respective beams. Preferably, the valve element has a self-closing structure in order to minimize emissions of harmful gases and odours through the gaps, arising from a slurry storage below the stable floor element. The valve element closes the gap and only opens when excrements must flow through the gap to the slurry storage.

The valve element may comprises parallel spring strips which only move away from each other in case excrements fall through the gap.

The upper surface may comprise grooves extending transversely with respect to the longitudinal direction of the beams. The grooves may be present in the upper side of the elastic region and their bottom surfaces may be inclined towards the closest gap between the beams.

Common elastic elements which envelope respective rigid regions of neighbouring beams may be interconnected, such that one piece of common elastic elements can be installed onto neighbouring beams at the same time.

It is noted that the concrete used for making the cores of the beams may be self-compacting concrete.

The invention will hereafter be elucidated with reference to the schematic drawings showing embodiments of the invention by way of example.
Fig. 1 is a perspective view of an embodiment of a stable floor element according to the invention.
Fig. 2 is a vertical cross-section of a part of the embodiment of Fig. 1 on a larger scale.
Fig. 3 is an enlarged perspective view of a rigid element of the stable floor element as shown in Fig. 1.
Fig. 4 is an enlarged perspective view of an elastic element of the stable floor element as shown in Fig. 1.
Fig. 5 is an enlarged perspective view of a part of a valve element of the stable floor element as shown in Fig. 1.
Fig. 6 is a similar view as Fig. 1 of an alternative embodiment on a smaller scale.
Fig. 7 is an enlarged view of a part of the embodiment of Fig. 6, indicated by reference sign VII in Fig. 6.
Figs. 8-9 are enlarged perspective views of elastic elements of the embodiment of the stable floor element as shown in Fig. 6.
Fig. 10 is a similar view as Fig. 2 of still another alternative embodiment.

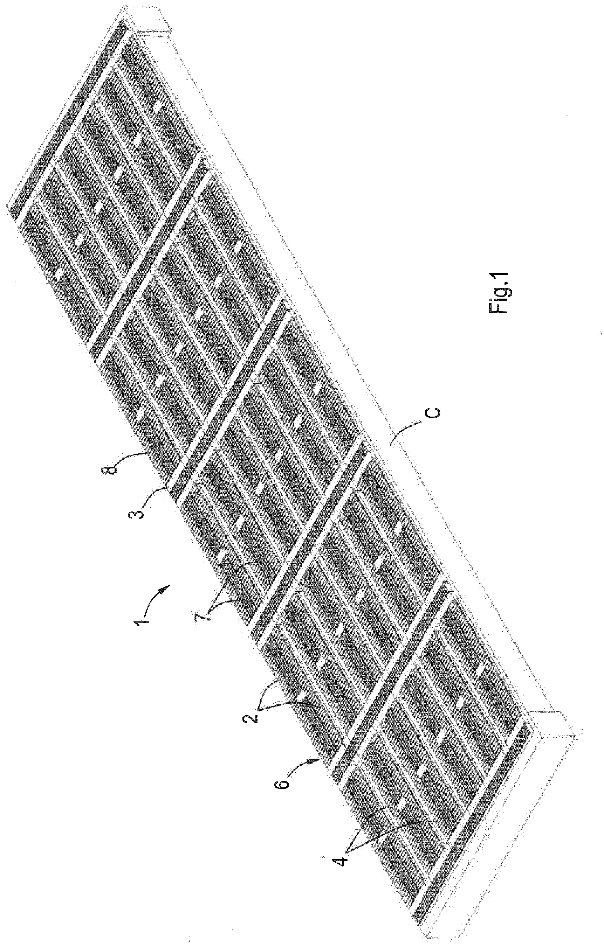

Fig. 1 shows an embodiment of a stable floor element 1, which comprises a grating and is mainly made of concrete. A number of similar stable floor elements 1 can be installed adjacent to each other to form a walking surface for animals in a stable. For example, the floor elements 1 may be located at a transport location in a stable for safe and comfortable motion without slipping.

The stable floor element 1 comprises six parallel longitudinal beams 2 which are fixed to each other via cross beams 3. Elongated gaps 4 extend between neighbouring longitudinal beams 2. The longitudinal beams 2 and the cross beams 3 have concrete cores C which are integral and made by means of a concrete moulding process. The concrete cores C of the longitudinal beams 2 are tapered downwardly such that the gaps 4 widen in that direction. In practice, the stable floor element 1 is mounted on a structure including a slurry storage such that excrements from the animals can be drained via the gaps 4 into the slurry storage.

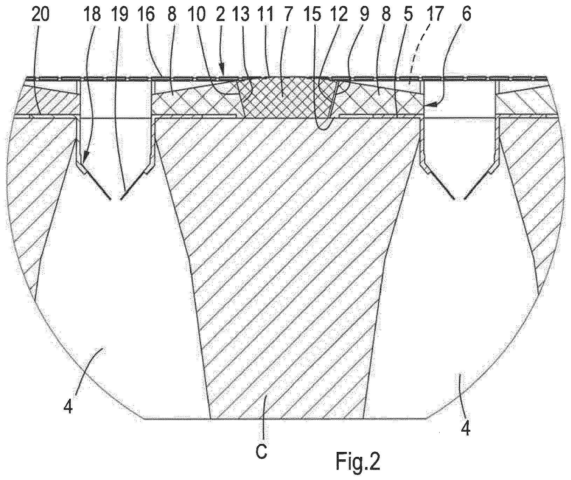

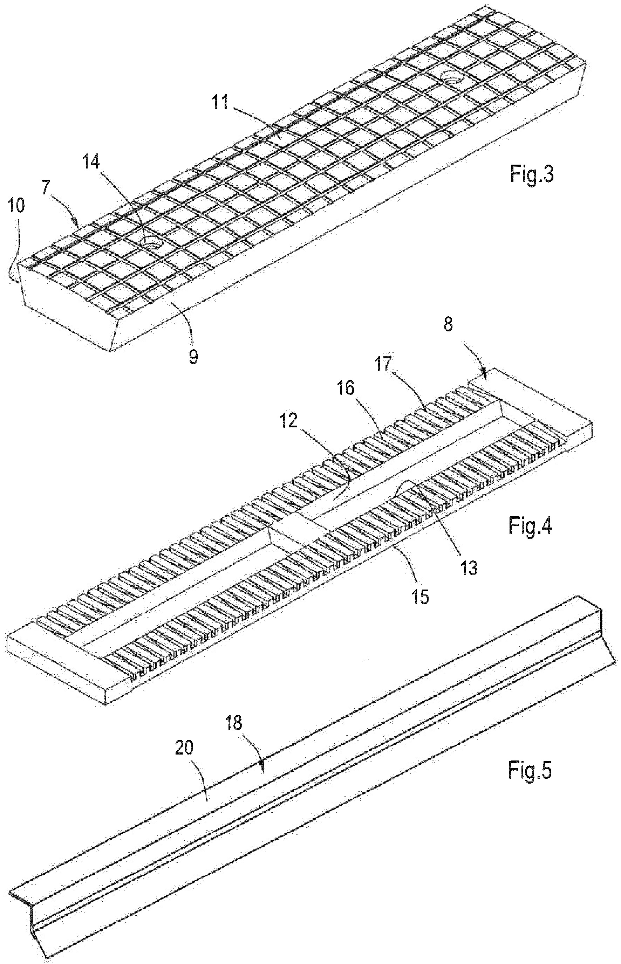

The concrete cores C of the longitudinal beams 2 have respective top sides 5, see Fig. 2. The top side 5 of the concrete core C of the beam 2 is substantially flat in this case and covered with a top layer 6 which prevents the top side 5 from direct contact with excrements of animals. The top layer 6 is provided with a rigid element 7 and an elastic element 8. The rigid element 7 is located in the centre of the beam 2 as seen in transverse direction thereof. The rigid element 7 is made of a plastic composite and the elastic element 8 is made of rubber. Alternative materials are conceivable as long as the rigid element 7 is less flexible than the elastic element 8. Both elements 7, 8 are shown separately in Figs. 3, 4, respectively.

The elastic element 8 comprises two rectangular through-holes which are aligned in longitudinal direction of the beam 2. Each hole is suitable for accommodating one rigid element 7. The rectangular holes may be created by means of laser cutting, for example. In the embodiment as shown in Fig. 1 each longitudinal beam 2 comprises two rigid elements 7 and one elastic element 8 between two neighbouring parallel cross beams 3, but the number and dimensions may be different in alternative embodiments.

Figs. 2 and 3 show that opposite outer side walls 9, 10 extending in longitudinal direction of the rigid element 7 are tapered in a direction from an upper side 11 of the rigid element 7 towards the concrete core C of the beam 2, i.e. downwardly. Similarly, opposite inner side walls 12, 13 extending in longitudinal direction of the elastic element 8 are also tapered in a direction from an upper side of the elastic element 8 towards the concrete core C of the beam 2. Fig. 2 shows that the outer side walls 9, 10 of the rigid element 7 cooperate with the inner side walls 12, 13 of the elastic element 8.

The rigid element 7 is fixed to the concrete core C of the beam 2 by means of screws through holes 14 in the rigid element 7, but numerous alternative fixing means are conceivable. The heads of the screws are buried into the rigid element 7 in order to minimize the risk of animals hurting themselves on an exposed screw. The respective tapered cooperating edges 9, 12 and 10, 13 cause the elastic element 8 to be snap-locked to the rigid element 7. In a condition as shown in Fig. 2 a portion of a lower side 15 of the elastic element 8 rests on the top side 5 of the concrete core C of the beam 2.

When installing the top layer 6 on the concrete core of the beam 2, the rigid element 7 can be fixed to the concrete core C at first, after which the elastic element 8 is bent about a longitudinal axis such that the inner side walls 12, 13 nearby its lower side 15 move away from each other. Subsequently, the elastic element 8 can be put downwardly over the rigid element 7. After relieving the elastic element 8 the cooperating side walls 9, 10 of the rigid element 7 and the inner side walls 12, 13 of the elastic element 8 keep the elastic element 8 in place.

As seen from above, the elastic element 8 envelopes the rigid element 7, such that in vertical cross section, as shown in Fig. 2, the elastic element 8 is located at opposite sides of the rigid element 7. The elastic element 8 also abuts ends of the rigid element 7 in longitudinal direction thereof. It is conceivable that at these ends contact surfaces of the rigid and elastic element 7, 8 are also tapered downwardly.

The elastic element 8 has an upper surface 16 which comprises grooves 17 extending transversely with respect to the longitudinal direction of the beam 2. The grooves 17 have bottom surfaces which are inclined downwardly in the direction of the adjacent gaps 4 between the beams 2 in order to optimize draining away urine from the animals and minimize danger of slipping. The upper side 11 of the rigid element 7 is provided with grooves in longitudinal direction and transversal direction so as to create a certain level of roughness, see Fig. 3. It is noted that the upper side 11 of the rigid element 7 is domed in order to improve flow of urine towards the gaps 4. Furthermore, the upper surface 16 of the elastic element 8 may be slightly higher than the upper side 11 of the rigid element 7, but in that case the bottom surfaces of the grooves 17 may extend below the upper side 11 of the rigid element 7.

Fig. 5 shows a part of a valve element 18 which is located at the gap 4 between two adjacent beams 2. The valve element 18 is a self-closing valve including opposite spring strips 19. The spring strips 19 have longitudinal hinges and normally contact each other in order to close the gaps 4. For clarity reasons, Fig. 2 shows a small gap between the cooperating spring strips 19.

The valve element 18 only opens if a certain load falls onto the spring strips 19. The valve element 18 is provided with flanges 20 which are sandwiched between the elastic element 8 and the concrete core C of the beam 2, as shown in Fig. 2. The flange 20 may surround the entire gap 4 such that opposite end portions of the flanges 20 in longitudinal direction of the gap 4 rest on the concrete cores C of the cross beams 3. Fig. 2 shows that the elastic element 8 partly rests on the top side 5 of the concrete core C of the beam 2 and partly rests on the flanges 20, but it is also conceivable that the elastic element 8 entirely rests on the flanges 20.

Fig. 1 shows that the top layer 6 also covers the concrete cores C of the cross beams 3. In this case the top layer 6 at the cross beams 3 mainly comprises an elongate rigid element which has different dimensions than the rigid elements 7 of the longitudinal beams 2.

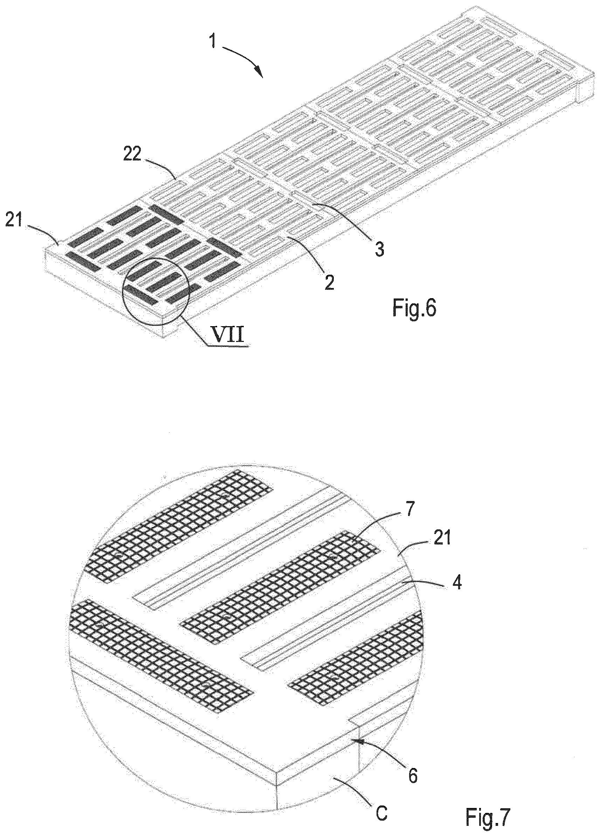

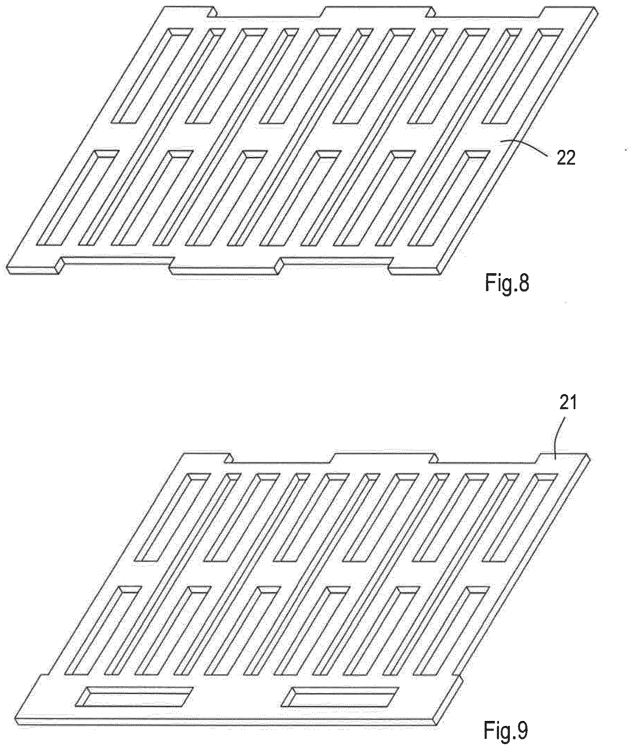

Fig. 6 shows an alternative embodiment of the stable floor element 1 and Fig. 7 shows a part thereof in detail. The alternative embodiment also comprises parallel longitudinal beams 2, cross beams 3 and elongated gaps 4 between neighbouring longitudinal beams 2. The top layer 6 is also provided with rigid elements 7 and elastic elements 21, 22, but particularly the elastic elements 21, 22 have different dimensions with respect to the elastic elements 8 of the embodiment as shown in Figs. 1-5. Fig. 9 shows a type of the elastic element 21 which is applied at opposite end portions of the stable floor element 1 in longitudinal direction, whereas Fig. 8 shows a type of the elastic element 22 which is applied between the opposite end portions. An advantaged of these types of elastic elements 21, 22 is that they can be installed relatively quickly to the rigid elements 7 of a plurality of beams 2. In fact a number of separate elastic elements 4 as shown in Fig. 4 are interconnected by portions of the elastic elements 21, 22 which rest on the concrete cores C of the cross beams 3 at the opposite ends of the gaps 4 in longitudinal direction.

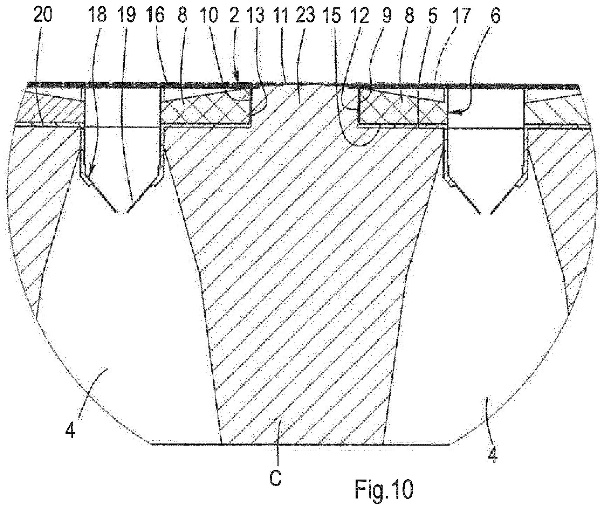

Fig. 10 shows still another embodiment of the stable floor element 1 according to the invention. In this case the beams 2 are not provided with separate rigid elements as shown and described hereinbefore. Fig. 10 shows that the top side 5 of the concrete core C is provided with an elevated portion 23, which forms a rigid region, comparable to the rigid element 7 in the embodiment as shown in Fig. 2. The upper side 11 of the elevated portion 23 is free of a covering such that the top side 5 of the concrete core C coincides with the upper side 11 of the elevated portion 23 in this embodiment. The elastic element 8 envelopes the elevated portion 23 and may be formed as shown in Fig. 4 or Figs. 8 and 9, or the like.

Fig. 10 shows that the outer side walls 9, 10 of the elevated portion 23 cooperate with the inner side walls 12, 13 of the elastic element 8, but the cooperating side walls are not tapered in this case because of the moulding process of the concrete cores C of the stable floor element 1.

The invention is not limited to the embodiments shown in the drawings and described hereinbefore, which may be varied in different manners within the scope of the claims and their technical equivalents. For example, the rigid elements may be attached to the concrete core of the beams upon manufacturing, i.e. during moulding and curing the concrete core instead of by screwing them to the cured concrete cores.

## Claims

1. A stable floor element (1), comprising at least two beams (2) which are spaced from each other, wherein each of the beams (2) has a concrete core (C) including a top side (5) which is covered with a top layer (6) that is provided with at least a rigid region (7) and an elastic region (8) which are adjacent to each other in a direction parallel to the top side (5), wherein upper sides (11, 16) of the regions (7, 8) form a common upper surface of the stable floor element (1), wherein the regions (7, 8) are formed from separate elements and elastic regions (8) extend at opposite sides of the rigid region (7) and wherein the elastic regions are formed by a common elastic element (8) that at least partly envelopes the rigid element (7).

2. A stable floor element according to claim 1, wherein the rigid element (7) is fixed to the concrete core (C) and the elastic element (8) is snap-locked to the rigid element (7).

3. A stable floor element (1) according to claim 2, wherein opposite side walls (9, 10) of the rigid element (7) and cooperating opposite inner side walls (12, 13) of the elastic element (8) are tapered in a direction from their upper sides (11, 16) towards the concrete core (C) of the beam (2).

4. A stable floor element (1), comprising at least two beams (2) which are spaced from each other, wherein each of the beams (2) has a concrete core (C) including a top side (5) which is provided with an elevated portion (23), thus forming a rigid region, wherein elastic members (8) are located adjacent to the elevated portion (23) at opposite sides thereof, thus forming elastic regions, wherein the elastic members (8) are fixed to each other and wherein the upper sides (11, 16) of the elevated portion (23) and the elastic members (8) form a common upper surface of the stable floor element (1), wherein the elastic members are formed by a common elastic element (8) which at least partly envelopes the elevated portion (23).

5. A stable floor element (1) according to claim 4, wherein the elastic members (8) extend at least up to opposite lateral edges of the beam (2).

6. A stable floor element (1) according to one of the preceding claims, wherein the upper sides (11, 16) of the rigid and elastic regions (7, 8, 23) have different roughnesses.

7. A stable floor element (1) according to one of the preceding claims, wherein the rigid region (7, 23) is elongated and its longitudinal direction is parallel to the longitudinal direction of the beam (2).

8. A stable floor element (1) according to claim 7, wherein the rigid region (7, 23) is located in the centre of the beam (2) as seen in transverse direction of the beam (2).

9. A stable floor element (1) according to one of the preceding claims, wherein a gap (4) between neighbouring beams (2) is provided with a valve element (18) for closing the gap (4) having flanges (20) which are at least partly sandwiched between the elastic regions (8) and the concrete cores (C) of the respective beams (2).

10. A stable floor element (1) according to claim 9, wherein the valve element (18) comprises parallel spring strips (19).

11. A stable floor element (1) according to one of the preceding claims, wherein the upper surface of the stable floor element (1) comprises grooves (17) extending transversely with respect to the longitudinal direction of the beams (2).

## Patentansprüche

1. Stallbodenelement (1), das wenigstens zwei Träger (2), die voneinander beabstandet sind, aufweist, wobei jeder der Träger (2) einen Betonkern (C) mit einer obersten Seite (5) hat, die mit einer Deckschicht (6) bedeckt ist, welche mit wenigstens einem starren Bereich (7) und einem elastischen Bereich (8) versehen ist, die in einer Richtung parallel zu der obersten Seite (5) benachbart zueinander sind, wobei Oberseiten (11, 16) der Bereiche (7, 8) eine gemeinsame obere Oberfläche des Stallbodenelements (1) bilden, wobei die Bereiche (7, 8) aus getrennten Elementen gebildet sind und sich elastische Bereiche (8) auf gegenüberliegenden Seiten des starren Bereichs (7) erstrecken und wobei die elastischen Bereiche durch ein gemeinsames elastisches Element (8) ausgebildet sind, welches das starre Element (7) wenigstens teilweise einhüllt.

2. Stallbodenelement (1) nach Anspruch 1, wobei das starre Element (7) an dem Betonkern (C) befestigt ist und das elastische Element (8) mit dem starren Element (7) schnappverbunden ist.

3. Stallbodenelement (1) nach Anspruch 2, wobei gegenüberliegende Seitenwände (9, 10) des starren Elements (7) und zusammenwirkende gegenüberliegende innere Seitenwände (12, 13) des elastischen Elements (8) in eine Richtung von ihren Oberseiten (11, 16) zu dem Betonkern (C) des Trägers (2) angeschrägt sind.

4. Stallbodenelement (1), das wenigstens zwei Träger (2), die voneinander beabstandet sind, aufweist, wobei jeder der Träger (2) einen Betonkern (C) mit einer obersten Seite (5) hat, die mit einem erhöhten Abschnitt (23) versehen ist und auf diese Weise einen starren Bereich bildet, wobei elastische Teile (8) benachbart zu dem erhöhten Abschnitt (23), auf zwei gegenüberliegenden Seiten davon, angeordnet sind und auf diese Weise elastische Bereiche bilden, wobei die elastischen Teile (8) aneinander befestigt sind und wobei die Oberseiten (11, 16) des erhöhten Abschnitts (23) und die elastischen Teile (8) eine gemeinsame obere Oberfläche des Stallbodenelements (1) bilden, wobei die elastischen Teile durch ein gemeinsames elastisches Element (8) ausgebildet sind, das den erhöhten Abschnitt (23) wenigstens teilweise einhüllt.

5. Stallbodenelement (1) nach Anspruch 4, wobei sich die elastischen Teile (8) wenigstens bis zu gegenüberliegenden Seitenkanten des Trägers (2) erstrecken.

6. Stallbodenelement (1) nach einem der vorhergehenden Ansprüche, wobei die Oberseiten (11, 16) der starren und elastischen Bereiche (7, 8, 23) verschiedene Rauheiten haben.

7. Stallbodenelement (1) nach einem der vorhergehenden Ansprüche, wobei der starre Bereich (7, 23) langgestreckt ist und seine Längsrichtung parallel zu der Längsrichtung des Trägers (2) ist.

8. Stallbodenelement (1) nach Anspruch 7, wobei der starre Bereich (7, 23), in Querrichtung des Trägers (2) betrachtet, in der Mitte des Trägers (2) angeordnet ist.

9. Stallbodenelement (1) nach einem der vorhergehenden Ansprüche, wobei eine Lücke (4) zwischen benachbarten Träger (2) mit einem Klappenelement (18) zum Schließen der Lücke (4) versehen ist, wobei das Klappenelement (18) mit Flanschen (20), die wenigstens teilweise zwischen den elastischen Bereichen (8) und den Betonkernen (C) der jeweiligen Träger (2) eingeschoben sind, versehen ist.

10. Stallbodenelement (1) nach Anspruch 9, wobei das Klappenelement (18) parallele Federbänder (19) aufweist.

11. Stallbodenelement (1) nach einem der vorhergehenden Ansprüche, wobei die obere Oberfläche des Stallbodenelements (1) Rillen (17) aufweist, die sich quer zur Längsrichtung der Träger (2) erstrecken.

## Revendications

1. Élément de sol stable (1), comprenant au moins deux poutres (2) qui sont espacées l'une de l'autre, dans lequel chacune des poutres (2) a un coeur en béton (C) incluant un côté supérieur (5) qui est recouvert par une couche supérieure (6) qui est dotée d'au moins une région rigide (7) et une région élastique (8) qui sont adjacentes l'une à l'autre dans une direction parallèle au côté supérieur (5), dans lequel des côtés supérieurs (11, 16) des régions (7, 8) forment une surface supérieure commune de l'élément de sol stable (1), dans lequel les régions (7, 8) sont formées à partir d'éléments séparés, et des régions élastiques (8) s'étendent sur des côtés en regard de la région rigide (7) et dans lequel les régions élastiques sont formées par un élément élastique commun (8) qui enveloppe au moins en partie l'élément rigide (7).

2. Élément de sol stable selon la revendication 1, dans lequel l'élément rigide (7) est fixé au coeur en béton (C) et l'élément élastique (8) est encliqueté sur l'élément rigide (7).

3. Élément de sol stable (1) selon la revendication 2, dans lequel des parois latérales en regard (9, 10) de l'élément rigide (7) et des parois latérales intérieures en regard coopérantes (12, 13) de l'élément élastique (8) sont effilées dans une direction depuis leurs côtés supérieurs (11, 16) vers le coeur en béton (C) de la poutre (2).

4. Élément de sol stable (1), comprenant au moins deux poutres (2) qui sont espacées l'une de l'autre, dans lequel chacune des poutres (2) a un coeur en béton (C) incluant un côté supérieur (5) qui est doté d'une partie élevée (23), formant ainsi une région rigide, dans lequel des éléments élastiques (8) sont situés de manière adjacente à la partie élevée (23) sur des côtés en regard de celle-ci, formant ainsi des régions élastiques, dans lequel les éléments élastiques (8) sont fixés l'un à l'autre et dans lequel les côtés supérieurs (11, 16) de la partie élevée (23) et les éléments élastiques (8) forment une surface supérieure commune de l'élément de sol stable (1), dans lequel les éléments élastiques sont formés par un élément élastique commun (8) qui enveloppe au moins en partie la partie élevée (23).

5. Élément de sol stable (1) selon la revendication 4, dans lequel les éléments élastiques (8) s'étendent au moins jusqu'à des arêtes latérales en regard de la poutre (2).

6. Élément de sol stable (1) selon l'une des revendications précédentes, dans lequel les côtés supérieurs (11, 16) des régions rigides et élastiques (7, 8, 23) ont différentes rugosités.

7. Élément de sol stable (1) selon l'une des revendications précédentes, dans lequel la région rigide (7, 23) est allongée et sa direction longitudinale est parallèle à la direction longitudinale de la poutre (2).

8. Élément de sol stable (1) selon la revendication 7, dans lequel la région rigide (7, 23) est située au centre de la poutre (2) vu dans la direction transversale de la poutre (2).

9. Élément de sol stable (1) selon l'une des revendications précédentes, dans lequel une fente (4) entre des poutres voisines (2) est dotée d'un élément de valve (18) pour fermer la fente (4) présentant des brides (20) qui sont prises en sandwich au moins en partie entre les régions élastiques (8) et les coeurs en béton (C) des poutres respectives (2).

10. Élément de sol stable (1) selon la revendication 9, dans lequel l'élément de valve (18) comprend des bandes de ressort parallèles (19).

11. Élément de sol stable (1) selon l'une des revendications précédentes, dans lequel la surface supérieure de l'élément de sol stable (1) comprend des rainures (17) s'étendant transversalement par rapport à la direction longitudinale des poutres (2).
